# EUROPÄISCHE PATENTSCHRIFT

(11) **EP 2 607 866 B1**
(45) Veröffentlichungstag und Bekanntmachung des Hinweises auf die Patenterteilung: **26.11.2014**
(21) Anmeldenummer: 11195309.7
(22) Anmeldetag: 22.12.2011
(51) Int. Cl.: G01G 7/04, G01G 23/48

(54) **Wägezelle nach dem Prinzip der elektromagnetischen Kraftkompensation mit optoelektronischem Positionssensor**
Weighing cell operating on the principle of electromagnetic force compensation with optoelectronic position sensor
Cellule de pesage fonctionnant selon le principe de l'équilibrage des forces électromagnétique avec capteur de position optoélectronique

(43) Veröffentlichungstag der Anmeldung: 26.06.2013
(73) Patentinhaber: Mettler-Toledo AG, 8606 Greifensee (CH)
(72) Erfinder: Metzger, Andreas, 8708 Männedorf (CH); Baltisberger, Stephan, 8625 Gossau (CH); Burkhard, Hans-Rudolf, 8492 Wila (CH); Béguin, Christophe, 8620 Wetzkon (CH); Uster, Markus, 8606 Nänikon (CH)

(56) Entgegenhaltungen:
- DE-A1- 3 743 073
- DE-A1- 10 153 603
- US-A- 3 727 708

## Beschreibung

Die vorliegende Erfindung betrifft eine auf dem Prinzip der elektromagnetischen Kraftkompensation basierende Waage, insbesondere eine Wägezelle mit einem optoelektronischen Lagesensor.

Das Prinzip der elektromagnetischen Kraftkompensation hat ein weites Anwendungsgebiet in den verschiedenartigsten Waagen, die im Handel, in der Industrie und in Laboratorien eingesetzt werden. Eine besondere Stärke dieses Prinzips liegt darin, dass sich damit Waagen von enormer Messgenauigkeit realisieren lassen. Mit einer nach dem elektromagnetischen Kraftkompensationsprinzip funktionierenden Analysenwaage kann z.B. eine Wägelast von 100 g mit einer Messauflösung von 0,01 mg bestimmt werden, d.h. auf ein Zehnmillionstel genau.

Eine Waage oder Wägezelle der vorliegenden Erfindung hat gattungsgemäss ein feststehendes Basisteil, einen am Basisteil beweglich gelenkten Lastaufnehmer zur Aufnahme der Gewichtskraft einer zu wägenden Last, ein am Basisteil festgelegtes Permanentmagnetsystem mit einem Luftspalt, eine im Luftspalt bewegliche und von einem Kompensationsstrom durchflossene Spule, sowie einen den Lastaufnehmer mit der Spule verbindenden Kraftübertragungsmechanismus. Ein optoelektronischer Lagesensor, dessen Sensorsignal der durch das Auflegen der Last auf den Lastaufnehmer verursachten Auslenkung der miteinander verbundenen beweglichen Teile der Waage aus einer Null-Lage entspricht, umfasst typischerweise einen Lichtsender und einen Lichtempfänger, welche mit einem Zwischenraum auf dem Basisteil festgelegt sind, sowie eine den Zwischenraum durchsetzende und die Auslenkung der beweglichen Teile mitmachende Blendenfahne. Das Signal des Lagesensors wird einem Regler zugeführt, welcher daraufhin den Kompensationsstrom so regelt, dass die Blendenfahne und die mit ihr verbundenen beweglichen Teile der Waage durch die elektromagnetische Kraft zwischen Spule und Permanentmagnet in die Null-Lage zurückgeführt werden. Mit andern Worten, die Regelung sorgt dafür, dass die elektromagnetische Kompensationskraft der Wägelast das Gleichgewicht hält. Da nach den Gesetzen des Elektromagnetismus die Stärke des Spulenstromes und die erzeugte Kraft zueinander proportional sind, kann das Gewicht einer auf den Lastempfänger gebrachten Wägelast durch Messung des Spulenstroms bestimmt werden.

Innerhalb des vorstehend umrissenen Gebietes konzentriert sich die vorliegende Erfindung auf den optoelektronischen Positionssensor. Die Hauptanforderung an den Positionssensor einer elektromagnetischen Kompensationswaage besteht darin, dass die Null-Lage, d.h. die auf das feststehende Basisteil bezogene Position der Abtastfahne bei welcher der Nulldurchgang des Sensorsignals zwischen negativen und positiven Werten stattfindet, mit höchster Genauigkeit und Reproduzierbarkeit eingehalten werden muss. Ausserdem sollte das Sensorsignal in einem möglichst linearen und reproduzierbaren Verhältnis zur Auslenkung der Blendenfahne stehen. Diese Forderungen müssen insbesondere innerhalb eines gegebenen Bereichs der Raumtemperatur und Luftfeuchtigkeit erfüllt werden.

In einem optoelektronischen Positionssensor gemäss US 3,805,907 besteht die Lichtquelle aus einer Leuchtdiode, und der Lichtempfänger wird von zwei Phototransistoren in Differentialschaltung gebildet. Die Phototransistoren sind auf der Stirnfläche einer am feststehenden Grundrahmen der Waage drehbar montierten Trägerscheibe diametral-symmetrisch zueinander angeordnet. Durch Verdrehen der Trägerscheibe kann die Empfindlichkeit, d.h. die Abhängigkeit des Sensorsignals von der Auslenkung der Blendenfahne, justiert werden. Allerdings ist dieser Zusammenhang keineswegs linear und kann deshalb genau genommen nur direkt in der Null-Lage als Proportionalitätsverhältnis (durch die Steigung der Empfindlichkeitskurve im Nullpunkt) ausgedrückt werden.

In einem weiteren optoelektronischen Positionssensor gemäss US 4,825,968 sind der Lichtsender und der Lichtempfänger des Lagesensors einander gegenüberliegend in einer zentralen Ausnehmung im Deckel des Permanentmagnetsystems angeordnet. Die Blendenfahne in Form einer Schlitzblende ist an einem auch die Kompensationsspule tragenden Waagebalken befestigt und ragt als bewegliche Schranke nach oben in den Zwischenraum zwischen Lichtsender und Lichtempfänger. Die Null-Lage, d.h. die Position der Blendenfahne bei welcher der Nulldurchgang des Sensorsignals zwischen negativen und positiven Werten stattfindet, ist bei dieser Anordnung nicht auf den tragenden Grundrahmen der Waage bezogen, sondern auf den Magnetdeckel. Durch unterschiedliche Wärmeausdehnungskoeffizienten im Grundrahmen der Waage und in der Permanentmagnetanordnung kann deshalb gegebenenfalls eine Temperaturdrift des Messnullpunkts der Waage auftreten.

Im Rahmen des Produktionsprozesses wird vor der eigentlichen Temperaturkompensation die Wägezelle grösseren Temperaturschwankungen, das heisst einem Alterungsprozess ausgesetzt, mit dem Ziel Empfindlichkeits- und Nullpunktshysterese zu stabilisieren sowie die Alterung zu minimieren. Diese Hysterese und Alterung können unter anderem durch mikroskopische Verschiebungen in den Verbindungsstellen zwischen sich verschieden thermisch ausdehnenden Komponenten der Wägezelle verursacht werden.

Es ist daher wünschbar, die Anzahl der beteiligten Komponenten und Verbindungsstellen zu reduzieren, die Ausdehnung der einzelnen Komponenten aufeinander abzustimmen und so die für oben genannten Alterungsprozess benötigte Zeit zu verkürzen, oder ganz einzusparen.

Die vorliegende Erfindung hat deshalb zur Aufgabe, einen Lagesensor für eine auf dem elektromagnetischen Kraftkompensationsprinzip beruhende Waage zu schaffen, welcher die oben genannten Hauptanforderungen innerhalb eines gegebenen Bereichs der Raumtemperatur und Luftfeuchtigkeit in höherem Masse erfüllt als der gegenwärtige Stand der Technik. Eine erste Forderung betrifft die Genauigkeit und Reproduzierbarkeit bei der Einhaltung der Null-Lage, welche im vorliegendenden Zusammenhang als die auf das feststehende Basisteil bezogene Position der Blendenfahne zu verstehen ist, bei welcher der Nulldurchgang des Sensorsignals zwischen negativen und positiven Werten stattfindet. Insbesondere soll eine erfindungsgemässe Lösung die oben erwähnte Temperaturhysterese des Messnullpunkts so weit als möglich verringern, ohne dass weiter Alterungszyklen gefahren werden müssen. Weiterhin soll das Sensorsignal einen möglichst linearen und reproduzierbaren Verlauf in Relation zur Auslenkung der Blendenfahne aufweisen. Dabei soll die Erfindungsaufgabe nach herstelltechnischen Gesichtspunkten möglichst optimal gelöst werden.

Diese Aufgabe wird erfüllt durch eine auf dem Prinzip der elektromagnetischen Kraftkompensation basierende Waage oder Wägezelle mit einem optoelektronischen Lagesensor gemäss dem unabhängigen Anspruch 1.

Weitere Ausführungsformen und Einzelheiten der Erfindung werden in den abhängigen Ansprüchen beschrieben.

Eine Wägezelle nach dem Prinzip der elektromagnetischen Kraftkompensation umfasst einen feststehenden Basisteil, einen am Basisteil beweglich gelenkten Lastaufnehmer zur Aufnahme der Gewichtskraft einer zu wägenden Last, ein am Basisteil festgelegtes Permanentmagnetsystem mit einem Luftspalt, eine im Luftspalt bewegliche und im Betrieb der Waage von einem Kompensationsstrom durchflossene Spule, sowie eine kraftübertragende mechanische Verbindung zwischen dem Lastaufnehmer und der Spule, ferner einen optoelektronischen Lagesensor, dessen Sensorsignal der durch das Auflegen der Last auf den Lastaufnehmer verursachten Auslenkung der Spule aus einer Null-Lage entspricht, sowie einen Regler, welcher aufgrund des Sensorsignals den Kompensationsstrom so regelt, dass die Spule und der mit ihr verbundene Lastaufnehmer durch die elektromagnetische Kraft zwischen Spule und Permanentmagnet in die Null-Lage zurückführt werden. Der optoelektronische Lagesensor umfasst einen Lichtsender und Lichtempfänger, welche mit Zwischenraum auf dem Basisteil angeordnet sind, sowie eine die Bewegung der Spule mitmachende Blendenfahne welche in der Art einer Lichtschranke den freien Bereich zwischen dem Lichtsender und Lichtempfänger durchsetzt.

Erfindungsgemäss ist der Lichtsender auf einem ersten Trägerelement zentriert auf der Verbindungslinie zwischen zwei ersten Befestigungsstellen des ersten Trägerelements montiert, wobei das erste Trägerelement, durch die beiden ersten Befestigungsstellen festgelegt , auf dem Basisteil angeordnet ist, und/oder der Lichtempfänger ist auf einem zweiten Trägerelement zentriert auf der Verbindungslinie zwischen zwei zweiten Befestigungsstellen des zweiten Trägerelements montiert, wobei das zweite Trägerelement, durch die beiden zweiten Befestigungsstellen festgelegt, auf dem Basisteil angeordnet ist.

Vorteilhaft weist eine erfindungsgemässe Wägezelle mit einem direkt auf jeweils einem Trägerelement aufgebrachten Lichtsender und/oder Lichtempfänger eine geringe Zahl an Verbindungsstellen auf, was letztendlich zu einem geringeren Aufwand bei oben erwähntem Alterungsprozess, d.h der Verkürzung des Prozesses der Alterungszyklen, sowie einer geringeren Nullpunktshysterese -und einer verbesserten Empfindlichkeit der Wägezelle führt.

Der Lichtsender und/oder der Lichtempfänger kann in Bezug auf die Verbindungslinie zwischen den beiden Befestigungsstellen in einer Richtung orthogonal zur Hebelauslenkung zentriert montiert sein oder in einer Richtung parallel zur Hebelauslenkung zentriert montiert sein.

Bevorzugt sind der Lichtsender und der Lichtempfänger derart am Basisteil angeordnet, dass deren Montage von derselben Seite des Basisteils erfolgen kann.

In einer bevorzugten Ausführungsform der Erfindung sind das Basisteil und die mechanische Verbindung zusammen aus einem monolithischen, homogenen Materialblock gearbeitet, in welchem Biegegelenke in der Form von dünnen Materialbrücken ausgebildet sind. Bei einer monolithischen Ausführungsform hängt zum Beispiel ein die Blendenfahne und die Spule tragender Hebel in direkter Materialverbindung mit dem Basisteil zusammen. Da sich eine durch Änderung der Umgebungstemperatur verursachte Expansion oder Kontraktion gleichmässig über die ganze monolithisch geformte Materialeinheit ausbreitet, ist die Position der am Hebel festgelegten Blendenfahne relativ zum Lichtstrom zwischen dem auf Trägerelementen unmittelbar am Basisteil festgelegten Lichtsender und Lichtempfänger unempfindlich gegenüber Änderungen der Raumtemperatur.

Die Befestigungsstellen sind als Befestigungslöcher in den jeweiligen Trägerelementen ausgeführt. Die Befestigung der jeweiligen Trägerelemente am Basisteil erfolgt vorzugsweise durch Kerbnägel, welche in Montierbohrungen des Basisteils einpressbar sind und die Befestigungslöcher spielfrei durchsetzen. Im Vergleich zu Schraubenverbindungen hat die Befestigung mit Kerbnägeln den Vorteil, dass keine Gewinde in die Montagebohrungen geschnitten werden müssen und dass keine spannungserzeugenden Drehmomente auf die jeweiligen Trägerelemente ausgeübt werden, welche beim Anziehen von Schrauben auftreten können. Dies kommt besonders dann zum Tragen, wenn das erste Trägerelement und/oder dass das zweite Trägerelement unmittelbar am Basisteil festgelegt ist.

Vorzugsweise ist jeweils eines der zwei Befestigungslöcher des Trägerelements und eines der zwei Befestigungslöcher des zweiten Trägerelements in Richtung der Verbindungslinie der jeweiligen Befestigungslöcher verlängert, um einer möglichen, innerhalb gegebener Toleranzgrenzen liegenden Unstimmigkeit zwischen dem Abstand der Befestigungslöcher und dem Abstand der Montagebohrungen Rechnung zu tragen.

Für den Lichtsender und den Lichtempfänger werden bevorzugt solche Produkte gewählt, welche zur Montage auf dem betreffenden Trägerelement entweder für die sogenannte Surface Mount Technik oder die Chip-on-Board Technik ausgelegt sind.

In einer vorteilhaften Ausführungsform der Erfindung sind die ersten und zweiten Montierbohrungen alle von der gleichen Seite des Basisteils her offen und zugänglich, sodass alle Kerbnägel in der gleichen Richtung in einem Arbeitsgang in die Montierbohrungen einpressbar sind.

Vorzugsweise wird als Lichtsender eine Leuchtdiode und als Lichtempfänger eine Photodifferentialdiode vorgesehen, wobei die Leuchtdiode und die Photodifferentialdiode selbstverständlich in ihrem spektralen Empfindlichkeitsbereich zueinander passen müssen.

Die Trägerelemente sind vorzugsweise aus einem Material gefertigt, dessen linearer Temperaturausdehnungskoeffizient zumindest in Richtung der Verbindungslinie der Befestigungslöcher an den linearen Temperaturausdehnungskoeffizient des Basisteils angepasst ist. Dadurch können Materialspannungen, welche bei einer unterschiedlichen Wärmeausdehnung des Trägerelements und des Basisteils auftreten würden, vermieden werden. Weiterhin werden damit auch die durch unterschiedliche Wärmeausdehnung verursachten mikroskopischen Verschiebungen in den Befestigungsstellen vermieden, welche den weiter oben erwähnten Hysterese- und Alterungsprozess des Messnullpunkts der Waage verursachen können. Ausserdem kann ein Trägerelement seine Dimensionen auch durch Feuchtigkeitsaufnahme ändern, was ebenfalls zu Spannungen und mikroskopischen Verschiebungen führen kann. Es ist deshalb von Vorteil, wenn die Trägerelemente aus einem Material mit einem geringen hygroskopischen Ausdehnungskoeffizient gefertigt sind.

Die Leuchtdiode kann im Betrieb ein erhebliches Mass an Wärme entwickeln. Um eine Überhitzung der Leuchtdiode und/oder des ersten Trägerelements zu verhindern, sollte letzteres dazu ausgebildet sein diese Wärme möglichst wirksam an das Basisteil abzuleiten. Diese Anforderung erfüllt zum Beispiel ein Trägerelement, das als Leiterplatte ausgebildet ist. Diese ist als Laminat aus einer wärmeleitenden Schicht, z.B. in Form einer Aluminiumplatte, und einer dielektrischen Isolierschicht aufgebaut, auf welcher die Leiterbahnen für die Stromversorgung der Leuchtdiode angeordnet sind. Bei Trägerelementen aus an und für sich schlecht wärmeleitendem Kunststoff- und Keramikmaterial kann die Wärmeleitfähigkeit durch Aufbringen einer Kupferschicht auf der Rückfläche und auf freien Bereichen der Komponentenfläche verbessert werden.

Die erfindungsgemässe Wägezelle wird im Folgenden näher beschrieben anhand von Ausführungsbeispielen, welche in den Zeichnungen dargestellt sind. Insofern als die abgebildeten Elemente von einer Zeichnung zur andern miteinander identisch sind, sind sie mit den gleichen Bezugssymbolen gekennzeichnet. Es zeigen:
- Fig. 1: eine Waage mit elektromagnetischer Kraftkompensation in schematischer Darstellung;
- Fig. 2: einen optoelektronischen Positionssensor mit Lichtsender, Lichtempfänger und Blendenfahne im Querschnitt, sowie die Blendenfahne in seitlicher Ansicht (Fig. 2A);
- Fig. 3: den Lichtsender in Form einer Leuchtdiode, welche in Surface Mount Technology auf einem ersten Trägerelement montiert ist;
- Fig. 4: den Lichtempfänger in Form einer Photodifferentialdiode, welche in Chip-On-Board Technology auf einem zweiten Trägerelement montiert ist;
- Fig. 5: die erfindungsgemässe Befestigung der Trägerelemente im Querschnitt und in seitlicher Ansicht (Fig. 5A);
- Fig. 6: eine alternative Lösung für die erfindungsgemässe Befestigung der Trägerelemente.

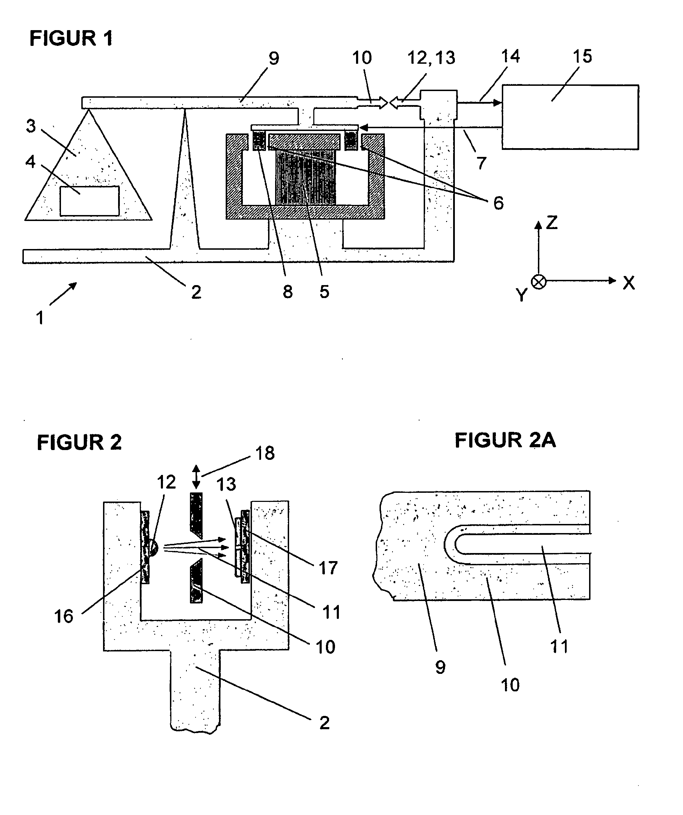

Eine Wägezelle 1 mit elektromagnetischer Kraftkompensation und optoelektronischem Lagesensor ist in schematischer Weise in Figur 1 dargestellt. Zur lagemässigen Orientierung ist ein kartesisches Koordinatensystem X, Y, Z beigefügt, dessen X- und Z-Achsen in der Zeichenebene der Figur 1 liegen, während die Y-Achse in den Halbraum hinter der Zeichenebene gerichtet ist. Man erkennt in dieser Darstellung das feststehende Basisteil 2, den am Basisteil 2 über den Waagebalken 9 beweglich gelenkten Lastaufnehmer 3 zur Aufnahme der Gewichtskraft der zu wägenden Last 4, das am Basisteil 2 festgelegte topfförmige und hier im Querschnitt gezeigte Permanentmagnetsystem 5 mit Luftspalt 6, die im Luftspalt 6 bewegliche und vom Kompensationsstrom 7 durchflossene Spule 8, sowie die kraftübertragende mechanische Verbindung , hier in der Form eines Waagebalkens 9, zwischen dem Lastaufnehmer 3 und der Spule 8. Der optoelektronische Lagesensor (in Figur 1 mit Blick in Y-Richtung symbolisch angedeutet und in Figur 2 mit Blick in X-Richtung im Detail dargestellt) erzeugt das Sensorsignal, welches der durch das Auflegen der Last 4 auf den Lastaufnehmer 3 verursachten Auslenkung der Spule aus der Null-Lage entspricht. In Figur 1 ist diese Null-Lage symbolisch durch aufeinander eingespielte Pfeile 10 und 12, 13 angedeutet, wobei der integral mit dem Basisteil 2 verbundene Pfeil 12, 13 den Lichtsender 12 und Lichtempfänger 13 darstellt, welche einander gegenüberliegend mit einem Zwischenraum auf dem Basisteil 2 festgelegt sind (siehe Figur 2). Der mit dem Waagebalken 9 integral verbundene Pfeil 10 stellt die Blendenfahne 10 mit schlitzförmiger Blende 11 dar (siehe Figur 2A), welche sich in dem Zwischenraum im Sinne des Doppelpfeils 18 auf- und ab bewegt und dabei durch Beeinflussung des vom Lichtsender 12 zum Lichtempfänger 13 gerichteten Lichtstroms das Sensorsignal 14 erzeugt. Das Signal 14 des Lagesensors wird einem Regler 15 zugeführt, welcher daraufhin den Kompensationsstrom 7 so regelt, dass die Blendenfahne 10 zusammen mit dem Waagebalken 9, der Spule und dem Lastaufnehmer 3 durch die elektromagnetische Kraft zwischen Spule 8 und Permanentmagnet 5 in die Null-Lage zurückführt wird, in welcher die elektromagnetische Kompensationskraft der Wägelast 4 das Gleichgewicht hält. Nach den Gesetzen des Elektromagnetismus ist die Kompensationskraft proportional zum Spulenstrom 7, und folglich kann das Gewicht der auf den Lastempfänger 3 gebrachten Wägelast 4 durch Messung des Spulenstroms 7 bestimmt werden.

Figur 2 illustriert ausserdem den Erfindungsgedanken, dass das erste Trägerelement 16 mit dem darauf montierten Lichtsender 12 und das zweite Trägerelement 17 mit dem darauf montierten Lichtempfänger 13 unmittelbar - das heisst ohne irgendwelche Zwischenteile - auf einem dem Basisteil 2 zugehörigen Bereich festgelegt sind. Diese unmittelbare ortsfeste Verbindung zum Basisteil 2 wirkt sich besonders vorteilhaft aus bei Wägezellen 1 in einer monolithischen Ausführungsform, worin das Basisteil 2 und der Kraftübertragungsmechanismus 9 zusammen aus einem einzigen homogenen Materialblock gearbeitet sind, in welchem die Drehlager der Hebel und Koppelglieder als Biegegelenke in der Form von dünnen Materialbrücken ausgebildet sind. So hängt zum Beispiel ein die Blendenfahne 10 tragender Hebel 9 über ein oder mehrere Biegelager in direkter Materialverbindung mit dem Basisteil 2 zusammen. Da sich die ganze monolithisch geformte Materialeinheit bei einer Änderung der Umgebungstemperatur gleichmässig ausdehnt oder zusammenzieht, ist die Position der am Hebel 9 festgelegten Blendenfahne 10 relativ zu dem auf Trägerelementen 16, 17 unmittelbar am Basisteil 2 festgelegten Lichtsender 12 und Lichtempfänger 13 relativ unempfindlich gegenüber Änderungen der Raumtemperatur.

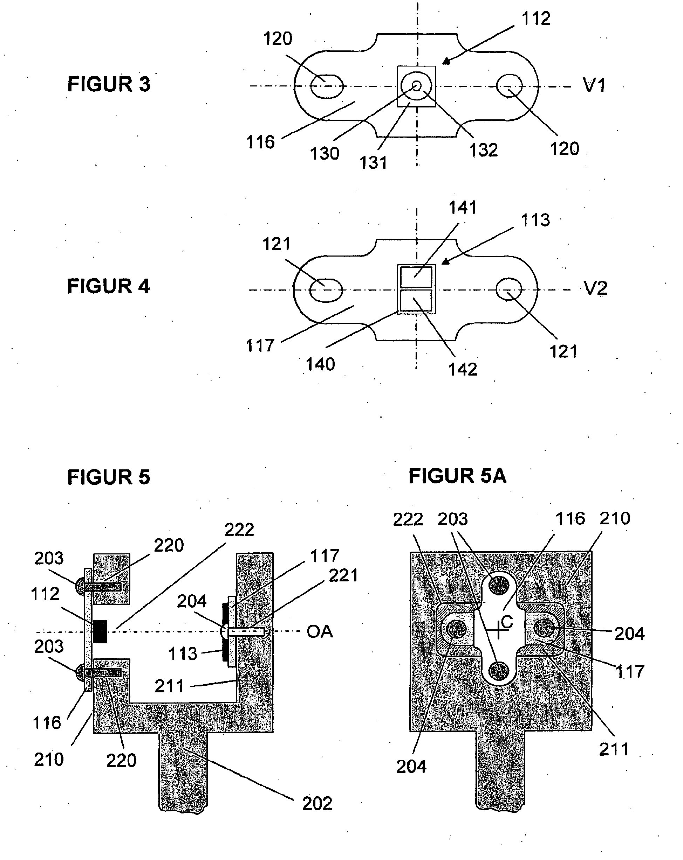

Gemäss dem Ausführungsbeispiel von Figur 3 ist das erste Trägerelement 116 des Lichtsenders beispielsweise in der Form einer ersten Leiterplatte- mit -ersten Befestigungslöchern 120 ausgebildet. Wie weiter unten im Zusammenhang mit Figur 5 beschrieben, weist das Basisteil 202 entsprechende Montagebohrungen 220 auf, so dass das erste Trägerelement 116 mit geeigneten Verbindungsmitteln am Basisteil 202 befestigt werden kann. -Wie man weiter in Figur 3 erkennt, ist jeweils eines der beiden ersten Befestigungslöcher 120 des ersten Trägerelements 116 in Richtung der Verbindungslinie der Befestigungslöcher 120 verlängert, um einer möglichen, innerhalb gegebener Toleranzgrenzen liegenden Unstimmigkeit zwischen dem Abstand der Befestigungslöcher 120 und dem Abstand der Montagebohrungen 220 Rechnung zu tragen.

Figur 3 zeigt das erste Trägerelement 116 mit dem Lichtsender in der Form einer Leuchtdiode oder LED-Einheit 112. In der hier dargestellten Ausführung ist das eigentliche LED-Element 130 auf einem Trägerblock 131 in einer als Reflektor ausgebildeten Vertiefung 132 angeordnet. Die Installation der blockförmigen LED-Einheit 112 auf dem ersten Trägerelement 116 erfolgt nach der Surface Mount Technik, welche dem Fachmann bekannt ist und deshalb hier nicht weiter beschrieben wird. Dabei ist die blockförmige LED-Einheit 112 auf dem ersten Trägerelement 116 vorzugsweise so zu positionieren, dass das LED-Element 130 im Mittelpunkt zwischen den Befestigungslöchern 120 auf der Verbindungslinie V1 liegt, wie es durch die strichpunktierten Mittellinien in Figur 3 angedeutet ist.

Wie in Figur 4 gezeigt, ist das zweite Trägerelement des Lichtempfängers 117 analog zum ersten Trägerelement des Lichtsenders beispielsweise in der Form einer zweiten Leiterplatte mit zweiten Befestigungslöchern 121 ausgebildet, welche zur Befestigung an den entsprechenden in Figur 5 dargestellten Montagebohrungen 221 des Basisteils 202 dienen. Ebenfalls analog zum ersten Trägerelement 116 ist eines der beiden zweiten Befestigungslöcher 121 in Richtung der Verbindungslinie V2 der Befestigungslöcher 121 verlängert, um einer möglichen, innerhalb gegebener Toleranzgrenzen liegenden Unstimmigkeit zwischen dem Abstand der Befestigungslöcher 121 und dem Abstand der Montagebohrungen 221 Rechnung zu tragen.

Der auf dem zweiten Trägerelement 117 montierte Lichtempfänger besteht aus einer Photodifferentialdiode 113 in der Form eines dünnen Plättchens oder Chips 140 mit zwei photoaktiven Flächenbereichen 141, 142 Die Installation der plättchenförmigen Photodifferentialdiode 113 auf dem zweiten Trägerelement 117 erfolgt bevorzugt nach der Chip-On-Board Technik, welche dem Fachmann bekannt ist und deshalb hier nicht weiter beschrieben wird. Dabei ist die Photodiodeneinheit 140 auf dem zweiten Trägerelement 117 in der Mitte zwischen den Befestigungslöchern 121 zu positionieren, vorzugsweise so, dass der schmale Trennbereich zwischen den beiden photoaktiven Flächenbereichen 141, 142 der Photodifferentialdiode 140 entlang der Verbindungslinie V2 der Befestigungslöcher ausgerichtet und zentriert ist.

Figur 5 zeigt einen zentralen, parallel zur Y/Z-Koordinatenebene verlaufenden Querschnitt durch den Positionssensor, während Figur 5A eine Ansicht des Positionssensors zeigt, welche auf die parallel zur X/Z-Koordinatenebene verlaufende Befestigungsfläche 210 gerichtet ist. Die Befestigung der Trägerelemente 116, 117 am Basisteil 202 erfolgt vorzugsweise durch Kerbnägel 203, 204 d.h. nagelartige Metallstifte mit Längskerben, welche in Montierbohrungen 220, 221 des Basisteils 202 einpressbar sind und die ersten Befestigungslöcher 120, beziehungsweise die zweiten Befestigungslöcher 121 spielfrei durchsetzen. Kerbnägel sind ein handelsüblicher Artikel und werden deshalb hier nicht weiter beschrieben. Die mit den Figuren 5 und 5A illustrierte Anordnung der Trägerelemente 116, 117 ist für die Befestigung mit Kerbnägeln 203, 204 besonders vorteilhaft, denn die Befestigungsflächen 210, 211 sind beide in der gleichen Richtung (in Figur 5 nach links und in Figur 5A gegen den Betrachter) orientiert. Die beiden Trägerelemente 116, 117 sind bezüglich der in Y-Richtung durch die Mittelpunkte C der Trägerelemente 116, 117 verlaufenden optischen Achse OA kreuzweise gegeneinander verdreht, wobei die Verbindungslinie der Befestigungslöcher 120 des ersten Trägerelements 116 in Z-Richtung und die Verbindungslinie der Befestigungslöcher 121 des zweiten Trägerelements 117 in X-Richtung verläuft. Die Kerbnägel 203 des ersten Trägerelements 116 sind somit für das Einpressen in die Montierbohrungen 221 in der Oberfläche 210 ohne weiteres zugänglich. Eine entsprechend geformte Durchgangsöffnung 222 des Basisteils 202 im Bereich des ersten Trägerelements 116 ermöglicht den Zugang für ein Presswerkzeug, um die Kerbnägel 204 des zweiten Trägerelements 117 in die entsprechenden Montierbohrungen 221 in der Oberfläche 211 einzupressen. Somit können die vier Kerbnägel 203, 204 zur Befestigung der Trägerelemente 116, 117 in einem Arbeitsgang von der gleichen Seite her eingepresst werden.

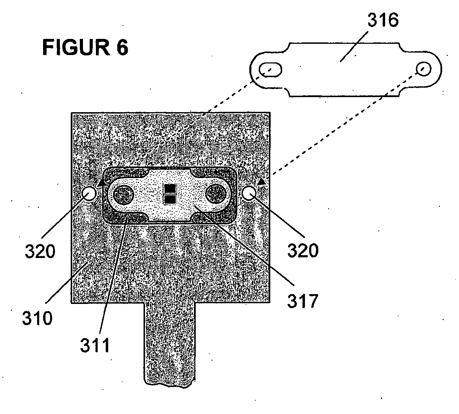

Figur 6 zeigt eine alternative Anordnung, bei der die Kerbnägel ebenfalls von der gleichen Seite her einpressbar sind, wobei jedoch die Trägerelemente 316 und 317 nicht gegeneinander verdreht angeordnet sind. Das erste Trägerelement 316 ist hier länger dimensioniert als das zweite Trägerelement 317, sodass das erste Trägerelement 316 die Durchgangsöffnung 322 in deren Längsrichtung überbrückt und an den Montierbohrungen 320 mit Kerbnägeln befestigt werden kann, wie es in Figur 6 durch gestrichelte Pfeile angedeutet ist. Bei dieser Anordnung muss allerdings in einem ersten Arbeitsgang das zweite Trägerelement 317 auf der durch die Durchgangsöffnung 322 sichtbaren Befestigungsfläche 311 montiert werden, bevor das erste Trägerelement 316 in einem zweiten Arbeitsgang auf der in Blickrichtung vorne liegenden Befestigungsfläche 310 montiert werden kann.

Zur Befestigung mit Kerbnägeln ist weiter zu bemerken, dass damit eine unverrückbare Verbindung zwischen dem jeweiligen Trägerelement und dem Basisteil hergestellt wird. Bei einer Temperaturänderung könnten somit unterschiedliche Wärmeausdehnungen des Trägerelements und des Basisteils zu unerwünschten Spannungen und zum Teil irreversiblen mikroskopischen Verschiebungen und Verformungen führen. Die Trägerelemente sollten deshalb aus einem Material gefertigt sein, dessen linearer Temperaturausdehnungskoeffizient zumindest in Richtung der Verbindungslinie der Befestigungslöcher an den linearen Temperaturausdehnungskoeffizient des Basisteils angepasst ist.

Wie ebenfalls bereits früher erwähnt, kann ein Trägerelement seine Dimensionen auch durch Feuchtigkeitsaufnahme ändern, was ebenfalls zu Spannungen und Verschiebungen führen kann. Das Material der Trägerelemente sollte deshalb auch einen möglichst geringen hygroskopischen Ausdehnungskoeffizient aufweisen.

Bei der Wahl des Trägerelementmaterials ist ausserdem zu berücksichtigen, dass vor allem die Leuchtdiode im Betrieb Wärme erzeugt. Damit sich die Leuchtdiode und das erste Trägerelement nicht unzulässig erhitzen, sollte das Trägerelementmaterial eine möglichst gute Wärmeleitfähigkeit besitzen.

Diesbezügliche Versuche mit einem Basisteil aus Aluminium zeigten, dass diese Anforderungen an den Temperaturausdehnungskoeffizient, den hygroskopischen Ausdehnungskoeffizient und die Wärmeleitfähigkeit z.B. mit einem Laminat aus mindestens einer glasfaserverstärkten Polymerschicht und mindestens einer Keramikschicht erfüllt werden können, welches von der Firma Rogers (www.rogerscorporation.com) unter der Bezeichnung RO 4350 hergestellt wird. Die an und für sich niedrige Wärmeleitfähigkeit dieses Materials kann durch eine Kupferbeschichtung auf der Rückseite und gegebenenfalls in den offenen Bereichen der Komponentenseite wesentlich verbessert werden. Gute Resultate wurden ebenfalls erzielt mit einem aus einer Metallschicht und einer dielektrischen Isolierschicht aufgebauten Trägerelementmaterial, welches von der Firma Bergquist (www.bergquistcompany.com) unter der Bezeichnung Bergquist T-Clad hergestellt wird.

### Bezugszeichenliste

- 1: Wägezelle
- 2, 202: Basisteil
- 3: Lastaufnehmer
- 4: Last, Wägelast
- 5: Permanentmagnetsystem
- 6: Luftspalt
- 7: Kompensationsstrom, Spulenstrom
- 8: Spule
- 9: Waagebalken
- 10: Blendenfahne
- 11: schlitzförmige Blende
- 12: Lichtsender
- 13: Lichtempfänger
- 14: Sensorsignal
- 15: Regler
- 16, 116, 316,: erstes Trägerelement
- 17, 117, 317: zweites Trägerelement
- 18: Doppelpfeil
- 112: Leuchtdiode, LED-Einheit
- 113: Photodifferentialdiode
- 120: erste Befestigungslöcher
- 120,: zweite Befestigungslöcher
- 130: LED-Element
- 131: Trägerblock
- 132: Reflektor
- 140: dünnes Plättchen, Chip
- 141, 141: photoaktive Flächenbereiche
- 203, 204: Kerbnägel
- 210, 211, 310, 311: Befestigungsflächen
- 220, 221, 320: Montierbohrungen
- 222, 322: Durchgangsöffnung
- X, Y, Z: Kartesisches Koordinatensystem
- V1, V2: Verbindungslinie
- OA: optische Achse

## Patentansprüche

1. Wägezelle (1), basierend auf dem Prinzip der elektromagnetischen Kraftkompensation, mit einem feststehenden Basisteil (2; 202), einem am Basisteil (2; 202) beweglich gelenkten Lastaufnehmer (3) zur Aufnahme der Gewichtskraft einer zu wägenden Last (4), einem am Basisteil (2; 202) festgelegten Permanentmagnetsystem (5) mit einem Luftspalt (6), einer im Luftspalt (6) beweglichen und im Betrieb der Wägezelle (1) von einem Kompensationsstrom (7) durchflossenen Spule (8), sowie mit einer kraftübertragenden mechanischen Verbindung zwischen dem Lastaufnehmer (3) und der Spule (8), ferner mit einem optoelektronischen Lagesensor, dessen Sensorsignal (14) der durch das Auflegen der Last (4) auf den Lastaufnehmer (3) verursachten Auslenkung der Spule (8) aus einer Null-Lage entspricht, und mit einem Regler (15), welcher aufgrund des Sensorsignals (14) den Kompensationsstrom (7) so regelt, dass die Spule (8) und der mit ihr verbundene Lastaufnehmer (3) durch die elektromagnetische Kraft zwischen der Spule (8) und dem Permanentmagnetsystem (5) in die Null-Lage zurückgeführt werden, wobei der optoelektronische Lagesensor einen Lichtsender (12) und einen Lichtempfänger (13), welche mit Zwischenraum auf dem Basisteil (2; 202) angeordnet sind, sowie eine den Zwischenraum durchsetzende und die Bewegung der Spule mitmachende Blendenfahne (10) umfasst, **dadurch gekennzeichnet dass** der Lichtsender (12) auf einem ersten Trägerelement (16, 116, 316) zentriert auf der Verbindungslinie (V1) zwischen zwei ersten Befestigungsstellen des ersten Trägerelements (16, 116, 316) montiert ist, wobei das erste Trägerelement (16, 116, 316), durch die beiden ersten Befestigungsstellen festgelegt, auf dem Basisteil (2, 202) angeordnet ist, und/oder dass der Lichtempfänger (13) auf einem zweiten Trägerelement (17, 117, 317) zentriert auf der Verbindungslinie (V2) zwischen zwei zweiten Befestigungsstellen des zweiten Trägerelements (17, 117, 317) montiert ist, wobei das zweite Trägerelement (17, 117, 317), durch die beiden zweiten Befestigungsstellen festgelegt, auf dem Basisteil (2, 202) angeordnet ist.

2. Wägezelle gemäss Anspruch 1, **dadurch gekennzeichnet dass** der Lichtsender (12) und/oder der Lichtempfänger (13) in Bezug auf die jeweilige Verbindungslinie (V1, V2) zwischen den beiden Befestigungsstellen in einer Richtung orthogonal zur Hebelauslenkung zentriert montiert ist.

3. Wägezelle gemäss Anspruch 1 oder 2, **dadurch gekennzeichnet dass** der Lichtsender(12) und/oder der Lichtempfänger (13) in Bezug auf die jeweilige Verbindungslinie (V1, V2) zwischen den beiden Befestigungsstellen in einer Richtung parallel zur Hebelauslenkung zentriert montiert ist.

4. Wägezelle gemäss einem der Ansprüche 1 bis 3, **dadurch gekennzeichnet dass** der Lichtsender (12) und der Lichtempfänger (13) derart am Basisteil (2, 202) angeordnet sind, dass deren Montage von der selben Seite des Basisteils (2, 202) erfolgen kann.

5. Wägezelle gemäss einem der Ansprüche 1 bis 4, **dadurch gekennzeichnet, dass** die ersten und/oder die zweiten Befestigungsstellen als erste Befestigungslöcher (120) im ersten Trägerelement (16, 116, 316), beziehungsweise als zweite Befestigungslöcher (121) im zweiten Trägerelement (17, 117, 317) ausgebildet sind und dass das erste Trägerelement (16, 116, 316) und/oder dass das zweite Trägerelement (117) unmittelbar am Basisteil (2, 202) festgelegt ist, wobei das Basisteil (2, 202) den Befestigungslöchern (120, 121) entsprechende erste, bzw. zweite Montierbohrungen (220, 221, 320) enthält.

6. Wägezelle gemäss Anspruch 5, **dadurch gekennzeichnet, dass** die Befestigung des ersten Trägerelements (16, 116, 316) und/oder des zweiten Trägerelements (17, 117, 317) am Basisteil (2, 202) durch Kerbnägel (203, 204) erfolgt, welche in die Montierbohrungen (220, 221, 320) einpressbar sind und die jeweiligen Befestigungslöcher (120, 121) spielfrei durchsetzen.

7. Wägezelle gemäss Anspruch 4 und 6, **dadurch gekennzeichnet, dass** die ersten Montierbohrungen (220) nach einer gleichen Seite des Basisteils (2, 202) hin offen und zugänglich sind wie die zweiten Montierbohrungen (221), sodass alle Kerbnägel (203, 204) von dieser gleichen Seite her in die jeweiligen Montierbohrungen (220, 221, 320) einpressbar sind.

8. Wägezelle gemäss einem der Ansprüche 5 bis 7, **dadurch gekennzeichnet, dass** jeweils eines der ersten Befestigungslöcher (120) und eines der zweiten Befestigungslöcher (121) in Richtung der jeweiligen Verbindungslinie (V1, V2) der Befestigungslöcher (120, 121) verlängert ist.

9. Wägezelle gemäss einem der Ansprüche 1 bis 8, **dadurch gekennzeichnet, dass** die Montage des Lichtsenders (12) auf dem ersten Trägerelement (116) und/oder die Montage des Lichtempfängers (13) auf dem zweiten Trägerelement (117) in Surface Mount Technik ausgeführt ist.

10. Wägezelle gemäss einem der Ansprüche 1 bis 8, **dadurch gekennzeichnet, dass** die Montage des Lichtsenders (12) auf dem ersten Trägerelement (116) und/oder die Montage des Lichtempfängers (13) auf dem zweiten Trägerelement (117) in Chip-On-Board Technik ausgeführt ist.

11. Wägezelle gemäss einem der Ansprüche 1 bis 10, **dadurch gekennzeichnet, dass** der Lichtsender (12) eine Leuchtdiode (112) umfasst und/oder der Lichtempfänger (13) eine Photodifferentialdiode (113) umfasst.

12. Wägezelle gemäss einem der Ansprüche 1 bis 11, **dadurch gekennzeichnet dass** das Basisteil (2, 202) und die mechanische Verbindung (9) zusammen aus einem monolithischen, homogenen Materialblock gearbeitet sind in welchem Biegegelenke in der Form von dünnen Materialbrücken ausgebildet sind.

13. Wägezelle gemäss einem der Ansprüche 1 bis 12, **dadurch gekennzeichnet, dass** das erste Trägerelement (16, 116, 316) und/oder das zweite Trägerelement (17, 117, 317) aus einem Material gefertigt ist, dessen linearer Temperaturausdehnungskoeffizient zumindest in Richtung der Verbindungslinie der Befestigungslöcher (120, 121) an den linearen Temperaturausdehnungskoeffizient des Basisteils (2, 202) angepasst ist.

14. Wägezelle gemäss einem der Ansprüche 1 bis 13, **dadurch gekennzeichnet, dass** das erste Trägerelement (16, 116, 316) und/oder das zweite Trägerelement (17, 117, 317) aus einem Material mit einem geringem hygroskopischen Ausdehnungskoeffizient gefertigt ist.

15. Wägezelle gemäss einem der Ansprüche 1 bis 14, **dadurch gekennzeichnet, dass** das erste Trägerelement (16, 116, 316) dazu ausgebildet ist, die von dem Lichtsender (12) entwickelte Wärme an das Basisteil (2, 202) abzuleiten.

## Claims

1. Weighing cell (1) based on the principle of electromagnetic force compensation, comprising
- a stationary base part (2; 202);
- a load receiver (3) constrained to the base part (2; 202) in guided movement and serving to receive the weight force of a weighing load (4);
- a permanent magnet system (5) mounted on the base part (2; 202), said magnet system (5) having an air gap (6);
- a coil (8) suspended in the air gap (6) with guided mobility and conducting an electrical compensation (7) current when the weighing cell (1) is in operation;
- a force-transmitting mechanism connecting the load receiver (3) to the coil (8);
- an optoelectronic position sensor whose sensor signal (14) is representative of the deflection of the coil (8) from a zero position which occurs as a result of placing a load (4) on the load receiver (3); and
- a closed-loop controller (15) which, in response to the sensor signal (14), regulates the compensation current (7) in such a way that the coil (8) and the load receiver (3) that is connected to it are returned to their zero position by the electromagnetic force that is acting between the coil (8) and the permanent magnet (5);
wherein the optoelectronic position sensor comprises a light emitter (12) and a light receiver (13) which are mounted on the base part (2; 202) with an interstitial space between them, and further comprises a shutter vane (10) traversing said interstitial space and participating in the movement of the coil;
**characterized in that** the light emitter (12) is mounted on a first carrier element (16, 116, 316), centered on the connecting line (V1) between two first fastening locations of the first carrier element (16, 116, 316), wherein the first carrier element (16, 116, 316) is arranged on the base part (2, 202), rigidly attached by way of the two first fastening locations; and/or that the light receiver (13) is mounted on a second carrier element (17, 117, 317), centered on the connecting line (V2) between two second fastening locations of the second carrier element (17, 117, 317), wherein the second carrier element (17, 117, 317) is arranged on the base part (2, 202), rigidly attached by way of the two second fastening locations.

2. Weighing cell according to claim 1, **characterized in that** the light emitter (12) and/or the light receiver (13) is mounted in a centered position relative to the respective connecting line (V1, V2) between the two fastening locations, with the connecting line oriented at a right angle to the direction of the lever deflection.

3. Weighing cell according to claim 1 or 2, **characterized in that** the light emitter (12) and/or the light receiver (13) is mounted in a centered position relative to the respective connecting line (V1, V2) between the two fastening locations, with the connecting line oriented parallel to the direction of the lever deflection.

4. Weighing cell according to one of the claims 1 to 3, **characterized in that** the light emitter (12) and the light receiver (13) are arranged on the base part (2, 202) in such a way that they can be installed from the same side of the base part (2, 202).

5. Weighing cell according to one of the claims 1 to 4, **characterized in that** the first and/or the second fastening locations are configured, respectively, as first fastening holes (120) in the first carrier element (16, 116, 316) and as second fastening holes (121) in the second carrier element (17, 117, 317), and that the first carrier element (16, 116, 316) and/or the second carrier element (17, 117, 317) are attached directly to the base part (2, 202), wherein the base part (2, 202) comprises first and second mounting holes (220, 221, 320) corresponding, respectively, to the first and second fastening holes (120, 121).

6. Weighing cell according to claim 5, **characterized in that** the first carrier element (16, 116, 316) and/or the second carrier element (17, 117, 317) are attached to the base part (2, 202) with grooved drive studs (203, 204) which can be pressed into the mounting holes (220, 221, 320) and which pass through the respective fastening holes (120, 121) without any loose play.

7. Weighing cell according to claim 4 and 6, **characterized in that** the first mounting holes (220) are open and accessible from the same side of the base part (2, 202) as the second mounting holes (221), so that all drive studs (203, 204) can be pressed into the respective mounting holes (220, 221, 320) from said same side.

8. Weighing cell according to one of the claims 5 to 7, **characterized in that** one of the first fastening holes (120) and one of the second fastening holes (121) is elongated in the direction of the connecting line (V1, V2) of the respective fastening holes (120, 121).

9. Weighing cell according to one of the claims 1 to 8, **characterized in that** the installation of the light emitter (12) on the first carrier element (116) and/or the installation of the light receiver (13) on the second carrier element (117) is realized through surface mount technology.

10. Weighing cell according to one of the claims 1 to 8, **characterized in that** the installation of the light emitter (12) on the first carrier element (116) and/or the installation of the light receiver (13) on the second carrier element (117) is realized through chip-on-board technology.

11.Weighing cell according to one of the claims 1 to 10, **characterized in that** the light emitter (12) comprises a light-emitting diode (112) and/or the light receiver (13) comprises a differential photodiode (113).

12.Weighing cell according to one of the claims 1 to 11, **characterized in that** the base part (2, 202) and the mechanical connection (9) are made in one piece out of a monolithic homogeneous material block, wherein flexure pivots are formed in the shape of thin material bridges.

13.Weighing cell according to one of the claims 1 to 12, **characterized in that** the first carrier element (16, 116, 316) and/or the second carrier element (17, 117, 317) are made of a material whose temperature coefficient of linear expansion is matched to the temperature coefficient of linear expansion of the base part (2, 202) at least in the direction of the connecting line of the fastening holes (120, 121).

14.Weighing cell according to one of the claims 1 to 13, **characterized in that** the first carrier element (16, 116, 316) and/or the second carrier element (17, 117, 317) are made of a material with a small coefficient of hygroscopic expansion.

15.Weighing cell according to one of the claims 1 to 14, **characterized in that** the first carrier element (16, 116, 316) is designed to drain away the heat that is generated by the light emitter (12) and conduct it to the base part (2, 202).

## Revendications

1. Cellule de pesage (1) basée sur le principe de la compensation de force électromagnétique, avec une partie de base (2, 202), un récepteur de charge (3) articulé de façon mobile sur la partie de base (2, 202) pour la réception de la force pondérale d'une charge à peser (4), un système d'aimant permanent (5) fixé sur la partie de base (2, 202) avec un entrefer (6), une bobine (8) mobile dans l'entrefer (6), traversée par un courant de compensation (7) pendant le fonctionnement de la cellule de pesage (1), et avec une liaison mécanique de transmission de force entre le récepteur de charge (3) et la bobine (8), ainsi qu'avec un capteur de position optoélectronique, dont le signal de capteur (14) correspondant à la déviation de la bobine (8) hors d'une position zéro, lequel est provoqué par le placement de la charge (4) sur le récepteur de charge (3), et avec un régulateur (15) réglant le courant de compensation (7) en réponse au signal de capteur (14) de manière à ce que la bobine (8) et le récepteur de charge (3) relié à celle-ci soient remis dans la position zéro par la force électromagnétique entre la bobine (8) et le système d'aimant permanent (5), dans laquelle le capteur de position optoélectronique comprend un émetteur de lumière (12) et un récepteur de lumière (13) agencés sur la partie de base (2, 202) avec un espace intermédiaire, ainsi qu'un talon d'étranglement (10) traversant l'espace intermédiaire et suivant le mouvement de la bobine, **caractérisée en ce que** l'émetteur de lumière (12) est monté sur un premier élément de support (16, 116, 316) en étant centré sur la ligne de liaison (V1) entre deux premiers points de fixation du premier élément de support (16, 116, 316), sachant que le premier élément de support (16, 116, 316) est agencé sur la partie de base (2, 202) en étant fixé au niveau des deux premiers points de fixation, et/ou **en ce que** l'émetteur de lumière (13) est monté sur un deuxième élément de support (17, 117, 317) en étant centré sur la ligne de liaison (V2) entre deux deuxièmes points de fixation du deuxième élément de support (17, 117, 317), sachant que le deuxième élément de support (17, 117, 317) est agencé sur la partie de base (2, 202) en étant fixé au niveau des deux deuxièmes points de fixation.

2. Cellule de pesage selon la revendication 1, **caractérisée en ce que** l'émetteur de lumière (12) et/ou le récepteur de lumière (13) est/sont monté(s) de façon centrée dans une direction orthogonale à la déviation de levier, par rapport à chacune des lignes de liaison (V1, V2) entre les deux points de fixation.

3. Cellule de pesage selon la revendication 1 ou 2, **caractérisée en ce que** l'émetteur de lumière (12) et/ou le récepteur de lumière (13) est/sont monté(s) de façon centrée dans une direction parallèle à la déviation de levier, par rapport à chacune des lignes de liaison (V1, V2) entre les deux points de fixation.

4. Cellule de pesage selon la revendication 1 ou 2, **caractérisée en ce que** l'émetteur de lumière (12) et/ou le récepteur de lumière (13) est/sont monté(s) de telle façon sur la partie de base (2, 202), que leur montage peut être effectué depuis le même côté de la partie de base (2, 202).

5. Cellule de pesage selon l'une des revendications 1 à 4, **caractérisée en ce que** les premiers et/ou les deuxièmes points de fixation sont conçus comme des premiers trous de fixation (120) dans le premier élément de support (16, 116, 316), ou comme des deuxièmes trous de fixation (121) dans le deuxième élément de support (17, 117, 317), et **en ce que** le premier élément de support (16, 116, 316) et/ou le deuxième élément de support (117) sont fixés directement sur la partie de base (2, 202), la partie de base (2, 202) contenant un premier ou deuxième alésage de montage (220, 221, 320) correspondant aux trous de fixation (120, 121).

6. Cellule de pesage selon la revendication 5, **caractérisée en ce que** la fixation du premier élément de support (16, 116, 316) et/ou du deuxième élément de support (17, 117, 317) sur la partie de base (2, 202) est réalisée par des clous à entaille (203, 204) aptes à être pressés dans les alésages de montage (220, 221, 320) et traversant sans jeu les différents trous de fixation (120, 121).

7. Cellule de pesage selon les revendications 4 et 6, **caractérisée en ce que** les premiers alésages de montage (220) sont ouverts et accessibles par le même côté de la partie de base (2, 202) que les deuxièmes alésages de montage (221), de sorte que tous les clous à entaille (203, 204) peuvent être pressés par ce même côté dans les différents alésages de montage (220, 221, 320).

8. Cellule de pesage selon l'une des revendications 5 à 7, **caractérisée en ce que** l'un des premiers trous de fixation (120) et l'un des deuxièmes trous de fixation (121) est respectivement prolongé dans la direction de chaque ligne de liaison (V1, V2) des trous de fixation (120, 121).

9. Cellule de pesage selon l'une des revendications 1 à 8, **caractérisée en ce que** le montage de l'émetteur de lumière (12) sur le premier élément de support (116) et/ou le montage du récepteur de lumière (13) sur le deuxième élément de support (117) est/sont réalisés selon la technique Surface Mount.

10. Cellule de pesage selon l'une des revendications 1 à 8, **caractérisée en ce que** le montage de l'émetteur de lumière (12) sur le premier élément de support (116) et/ou le montage du récepteur de lumière (13) sur le deuxième élément de support (117) est/sont réalisés selon la technique Chip-On-Board.

11. Cellule de pesage selon l'une des revendications 1 à 10, **caractérisée en ce que** l'émetteur de lumière (12) comprend une diode électroluminescente (112) et/ou **en ce que** le récepteur de lumière (13) comprend une diode photo-différentielle (113).

12. Cellule de pesage selon l'une des revendications 1 à 11, **caractérisée en ce que** la partie de base (2, 202) et la liaison mécanique (9) sont réalisées conjointement à partir d'un bloc de matériau homogène monolithique, dans lequel sont conçues des articulations de fléchissement sous la forme de ponts de matériau étroits.

13. Cellule de pesage selon l'une des revendications 1 à 12, **caractérisée en ce que** le premier élément de support (16, 116, 316) et/ou le deuxième élément de support (17, 117, 317) sont réalisés à partir d'un matériau dont le coefficient linéaire de dilatation thermique est adapté au coefficient linéaire de dilatation thermique de la partie de base (2, 202), du moins dans la direction de la ligne de liaison des trous de fixation (120, 121).

14. Cellule de pesage selon l'une des revendications 1 à 13, **caractérisée en ce que** le premier élément de support (16, 116, 316) et/ou le deuxième élément de support (17, 117, 317) sont réalisés à partir d'un matériau présentant un faible coefficient de dilatation hygroscopique.

15. Cellule de pesage selon l'une des revendications 1 à 14, **caractérisée en ce que** le premier élément de support (16, 116, 316) est conçu pour dévier la chaleur développée par l'émetteur de lumière (12) vers la partie de base (2, 202).
